# FASCICULE DE BREVET EUROPEEN

(11) **EP 4 227 093 B1**
(45) Date de publication et mention de la délivrance du brevet: **22.07.2026**
(21) Numéro de dépôt: 23156295.0
(22) Date de dépôt: 13.02.2023
(51) Int. Cl.: B33Y 40/20, B07B 1/16, B07B 1/40, B07B 1/42, B07B 1/46, B07B 13/16, B08B 7/02, B22F 10/68, B29C 64/35, B33Y 10/00, B33Y 30/00, B22F 12/82, B07B 13/11, B22F 3/10

(54) **PROCÉDÉ DE DÉPOUDRAGE D'UN OBJET OBTENU PAR SYNTHÈSE ADDITIVE DE TYPE LIAGE DE POUDRE PAR PROJECTION DE LIANT**
VERFAHREN ZUM AUFKLÄREN EINES DURCH GENERATIVE SYNTHESE VON PULVERBINDETYP ERHALTENEN OBJEKTS DURCH BINDEMITTELSPRITZEN
METHOD FOR DE-EMBOSSING A BINDER-TYPE ADDITIVE SYNTHESIS OBJECT BY BINDER JETTING

(30) Priorité: 11.02.2022 FR 2201231; 11.02.2022 FR 2201232
(43) Date de publication de la demande: 16.08.2023
(73) Titulaire: Dehon, 75011 Paris (FR)
(72) Inventeur: LE MEUR, Jean-Pierre, 73100 AIX LES BAINS (FR); BECUE, Franck, 74380 BONNE (FR)
(74) Mandataire: Novaimo

(56) Documents cités:
- WO-A1-2018/191689
- CN-A- 113 102 230
- US-A1- 2015 266 211

## Description

### Domaine technique de l'invention

L'invention concerne le domaine des procédés de fabrication par synthèse additive de type liage de poudre par projection de liant, couramment dénommé "binder jetting". Plus précisément, l'invention concerne un procédé de dépoudrage d'un objet obtenu par synthèse additive de type liage de poudre par projection de liant. L'invention porte aussi sur un équipement de dépoudrage configuré pour mettre en œuvre un tel procédé de dépoudrage et sur une installation de fabrication par synthèse additive de type liage de poudre par projection de liant comprenant un tel équipement de dépoudrage.

### Etat de la technique antérieure

La fabrication par synthèse additive de type liage de poudre par projection de liant, aussi dénommée par l'anglicisme "Binder Jetting" ou "Inkjet Powder Printing" est un procédé utilisant un agent liant, déposé localement sur une fine couche de poudre, notamment une poudre métallique, couche par couche, selon un modèle tridimensionnel. En pratique, un rouleau automatisé répartit une fine couche de poudre sur un plateau de fabrication. Une tête d'impression applique un liant liquide sélectivement sur une partie de la surface de la poudre, créant ainsi une couche de l'objet. Puis, le plateau de fabrication descend d'un pas prédéterminé pour permettre l'ajout d'une nouvelle couche de poudre sur laquelle est à nouveau appliqué du liant. Le procédé est ainsi répété jusqu'à la création de l'objet. Ce procédé permet de fabriquer des objets tridimensionnels de forme variée et complexe et ne nécessite pas de créer des supports spécifiques, la poudre non liée jouant elle-même ce rôle. Le procédé ne requiert donc pas d'outillage spécifique et peut avantageusement être mis en œuvre pour fabriquer des prototypes ou de petites séries d'objets. Le procédé peut aussi être utilisé pour fabriquer des objets dont la forme complexe n'est pas compatible avec une fabrication traditionnelle par moulage ou par usinage. Le document US2020122230A1 décrit par exemple un tel procédé de fabrication.

Contrairement à d'autres procédés de fabrication par synthèse additive, les objets obtenus au moyen d'un tel procédé, couramment dénommées "pièces à vert", sont extrêmement fragiles. En effet, la projection d'un liant confère une très faible cohésion entre les particules de poudre. De ce fait, les pièces à vert ne peuvent pas supporter de contraintes mécaniques importantes et doivent être manipulées avec la plus grande précaution. Pour obtenir une solidité suffisante, les pièces à vert doivent impérativement être consolidées, notamment par frittage (c'est-à-dire en les chauffant dans un four) ou encore en appliquant un revêtement.

Toutefois, à l'issue de leur fabrication par synthèse additive, les pièces à vert sont généralement couvertes de poudre non liée. La poudre non liée peut notamment s'accumuler dans des trous non débouchant de faibles dimensions des pièces à vert. Les pièces à vert doivent donc être dépoudrées avant d'être solidifiées. Le dépoudrage des pièces à vert est particulièrement complexe en raison de leur extrême fragilité résultant du procédé de synthèse additive de type liage de poudre par projection de liant, et en raison de la géométrie complexe de ces pièces. Pour le dépoudrage des pièces à vert, on connaît des techniques d'aspiration ou de soufflage d'air comprimé. On connaît également des procédés de dépoudrage manuels, notamment au moyen de pinceaux. Ces techniques sont peu efficaces et fastidieuses, notamment en raison de la forme complexe des objets fabriqués, ainsi qu'en raison de la petite taille des particules non liées qui peuvent présenter un risque d'inhalation. Le procédé de dépoudrage manuel est ainsi généralement réalisé au moyen d'une boîte à gants de laboratoire. De tels procédés ne permettent pas d'envisager une mise en œuvre du dépoudrage à grande échelle.

Le document WO2018/191689 A1 divulgue un procédé de dépoudrage selon le préambule de la revendication 1.

### Présentation de l'invention

Le but de l'invention est de fournir un équipement de dépoudrage et un procédé de dépoudrage pour des objets obtenus par synthèse additive de type liage de poudre avec projection de liant remédiant aux inconvénients ci-dessus et améliorant les équipements et procédés connus de l'art antérieur.

Plus précisément, un premier objectif de l'invention est un équipement de dépoudrage et un procédé de dépoudrage pour des objets obtenus par synthèse additive de type liage de poudre avec projection de liant qui préservent l'intégrité desdits objets.

### Résumé de l'invention

L'invention se rapporte à un procédé de dépoudrage conformément à la revendication 1.

Ledit objet peut être obtenu par liage de particules, notamment de particules métalliques, dont le diamètre est inférieur ou égale à 80µm, de préférence inférieur ou égal à 40µm.

La vibration par ultrasons du séparateur peut être obtenue par des ondes ultrasonores de fréquence comprise entre 20 kHz et 80 kHz inclus, notamment entre 25kHz et 45kHz inclus.

L'étape de vibration par ultrasons comprend une alternance de phases de vibration du séparateur et de phases de repos où le séparateur ne vibre pas.

Le séparateur peut s'étendre dans un plan incliné selon un angle inférieur ou égal à 20° avec un plan horizontal, notamment un angle compris entre 5° et 10° inclus avec un plan horizontal.

Le transvasement de ladite masse peut être effectué au moyen d'une racle mobile en translation horizontale.

Le transvasement de ladite masse peut être effectué par un moyen de génération de vibrations fonctionnant selon le principe du couloir vibrant.

Le séparateur peut être une plaque de tôle pourvue d'une pluralité de trous, chaque trou étant formé depuis la face du séparateur sur laquelle ledit objet est destiné à reposer.

Le dispositif de séparation peut comprendre un premier séparateur et un deuxième séparateur positionné en dessous du premier séparateur, une taille de maille du deuxième séparateur étant strictement inférieure à une taille de maille du premier séparateur, et le procédé de dépoudrage peut comprendre :
- une étape de vibration ultrasonore du premier séparateur de sorte à séparer les particules non liées dudit objet et de sorte à faire avancer ledit objet sur le séparateur, et
- une étape de vibration ultrasonore du deuxième séparateur de sorte à tamiser les particules non liées.

Le dispositif de séparation peut comprendre une unique structure et un convertisseur électroacoustique configuré pour transmettre des ultrasons à la structure, le premier séparateur et le deuxième séparateur étant fixés à la structure, le premier séparateur et le deuxième séparateur étant mis en vibration par ultrasons lors des étapes de vibration du premier séparateur et du deuxième séparateur, le dispositif de séparation comprenant en outre une ouverture pour évacuer des refus du deuxième séparateur, l'ouverture comprenant un bord commun avec le deuxième séparateur, notamment l'ouverture étant formée directement dans le deuxième séparateur.

L'invention se rapporte également à un procédé de fabrication d'un objet, le procédé de fabrication comprenant :
- une phase de fabrication dudit objet par synthèse additive de type liage de poudre par projection de liant au moyen d'une unité de fabrication, puis
- la mise en œuvre du procédé de dépoudrage dudit objet tel que défini précédemment.

Le procédé de fabrication peut comprendre une étape de frittage dudit objet suite à la mise en œuvre du procédé de dépoudrage.

L'unité de fabrication peut comprendre un fond mobile en translation, le fond mobile étant apte à descendre progressivement pour fabriquer ledit objet couche par couche, et le transvasement de ladite masse sur le séparateur peut être précédé d'une étape de remontée du fond mobile.

L'invention se rapporte également à un équipement de dépoudrage pour dépoudrer un objet fabriqué par synthèse additive de type liage de poudre, l'équipement de dépoudrage comprenant :
- un dispositif de transvasement configuré pour déplacer latéralement une masse comprenant un objet à dépoudrer et des particules non liées,
- un dispositif de séparation comprenant un séparateur et un moyen de vibration ultrasonores du séparateur, le séparateur comprenant une taille de maille adaptée pour laisser passer les particules non liées et adaptée pour retenir ledit objet, le séparateur s'étendant dans un plan incliné selon un angle non nul avec un plan horizontal.

L'invention se rapporte également à une installation de fabrication par synthèse additive de type liage de poudre, l'installation comprenant un récipient comprenant un fond mobile en translation, le fond mobile étant apte à descendre progressivement pour fabriquer ledit objet couche par couche puis à remonter, l'installation comprenant un équipement de dépoudrage tel que défini précédemment, le dispositif de transvasement de l'équipement de dépoudrage étant fixé au-dessus du récipient.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est un schéma d'une installation de fabrication par synthèse additive comprenant un équipement de dépoudrage selon un premier mode de réalisation de l'invention, un objet fabriqué par liage de poudre étant en place dans un récipient ayant servi à sa fabrication.
La figure 2 est un schéma de l'installation de fabrication de la figure 1, ledit objet et des poudres non liées autour dudit objet étant en cours de transvasement vers un séparateur de l'équipement de dépoudrage.
La figure 3 est un schéma de l'installation de fabrication de la figure 1, ledit objet et les poudres non liées autour dudit objet étant sur un séparateur de l'équipement de dépoudrage.
La figure 4 est un schéma d'une installation de fabrication par synthèse additive comprenant un équipement de dépoudrage selon une variante de réalisation.
La figure 5 est un schéma d'un dispositif de séparation de l'équipement de dépoudrage selon une autre variante de réalisation.
La figure 6 est un schéma d'un dispositif de séparation de l'équipement de dépoudrage selon une autre variante de réalisation.
La figure 7 est une vue schématique de dessus d'un premier séparateur du dispositif de séparation de la figure 6.
La figure 8 est une vue schématique de dessus d'un deuxième séparateur du dispositif de séparation de la figure 6.

### Description détaillée

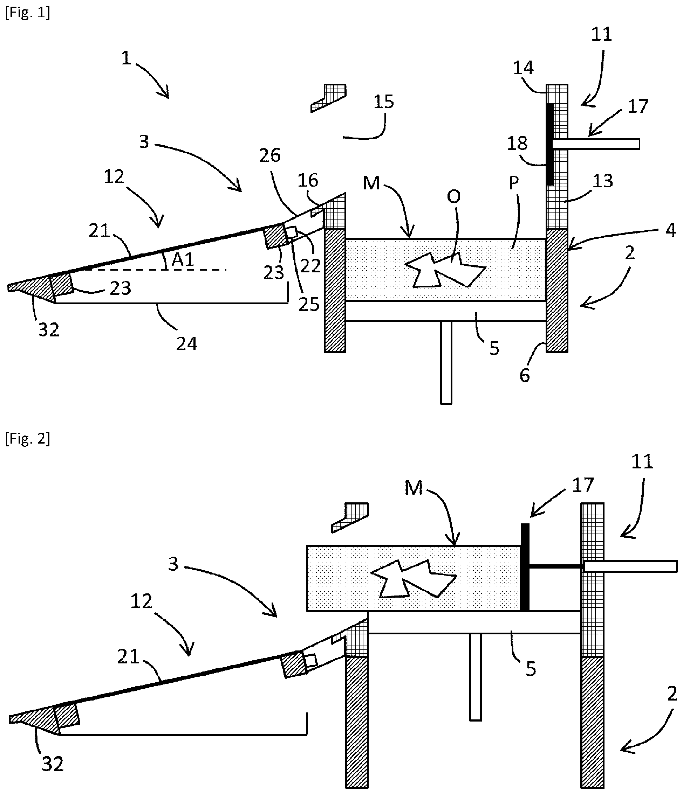

La figure 1 illustre schématiquement une installation de fabrication 1 par synthèse additive de type liage de poudre par projection de liant selon un premier mode de réalisation de l'invention. L'installation de fabrication 1 comprend d'une part une unité de fabrication 2 configurée pour fabriquer au moins un objet par synthèse additive de type liage de poudre par projection de liant et, d'autre part, un équipement de dépoudrage 3 configuré pour dépoudrer l'objet précédemment fabriqué. On considère que l'installation de fabrication 1 repose sur un sol horizontal. Les termes "inférieur", "supérieur", "bas" et "haut" visent à préciser un agencement particulier relativement à un axe vertical.

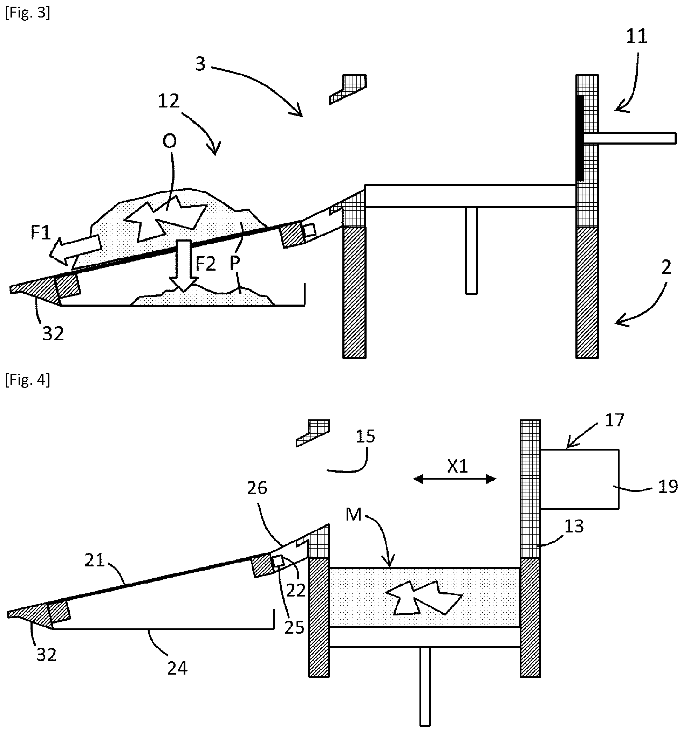

L'unité de fabrication 2 comprend un récipient 4 pourvu d'un fond mobile 5, mobile en translation parallèlement à un axe vertical. Le fond mobile 5 peut notamment être actionné par un vérin contrôlé par une unité de commande électronique. Le récipient 4 comprend également des parois latérales 6 fixes, s'étendant verticalement et agencées autour du fond mobile 5. Le fond mobile 5 peut présenter toute forme géométrique, notamment une forme rectangulaire. Il est mobile entre une position basse (représentée par exemple sur la figure 1) et une position haute (représentée par exemple sur les figures 2 et 3). En position haute, une surface supérieure du fond mobile 5 peut s'élever au niveau d'un bord supérieur des paroi latérales 6 ou au-dessus de celles-ci. Le fond mobile 5 est apte à descendre progressivement pour fabriquer un objet O couche par couche puis à remonter. Le volume intérieur du récipient 4 est donc variable et est maximal lorsque le fond mobile 5 est en position basse. A l'issue d'une étape de fabrication de l'objet O par synthèse additive, le récipient 4 contient donc une masse M comprenant l'objet O et des particules non liées P, c'est-à-dire des particules à l'état de poudre. L'objet O est donc noyé au milieu des particules non liées P. Dans la description qui suit, on considère que cette masse M contient un seul objet O, toutefois la masse M pourrait très bien contenir plusieurs objets fabriqués simultanément dans le récipient 4, ce qui optimiserait l'utilisation du volume du récipient.

L'unité de fabrication 2 peut comprendre d'une part un moyen d'application d'une succession de couches de particules dans le récipient et d'autre part un moyen de projection d'un liant, ou tête d'impression, adapté pour agglomérer localement des particules entre elles. Le moyen d'application d'une succession de couches de particules et le moyen de projection de liant peuvent être agencés de manière amovible au-dessus du récipient 4. Ainsi, à l'issue d'une phase de fabrication de l'objet O par synthèse additive dans le récipient 4, ces moyens peuvent être écartés pour laisser la place à l'équipement de dépoudrage 3 dont une partie se fixe au-dessus du récipient 4.

Avant d'être liées, lesdites particules forment un matériau pulvérulent, c'est-à-dire qu'elles sont à l'état de poudre. Les particules sont de préférence des particules métalliques. Alternativement ces particules pourraient être des particules de céramique, de gypse, ou encore des particules de sable ou encore des particules de polymère. Les particules peuvent aussi être non métalliques et/ou inorganiques, comme par exemple des oxydes, des carbures, des nitrures ou encore des borures. La taille des particules peut être par exemple comprise entre 10µm et 80µm, de préférence entre 10µm et 40µm. Le liant est une colle, de préférence à l'état liquide, dont la nature est choisie en fonction des particules utilisées.

L'équipement de dépoudrage 3 comprend principalement un dispositif de transvasement 11 et un dispositif de séparation 12. Le dispositif de transvasement 11 est configuré pour déplacer latéralement la masse M contenant l'objet O à dépoudrer et les particules non liées P. Le dispositif de transvasement 11 comprend notamment une coiffe 13 fixée de manière amovible au récipient 4, au-dessus de celui-ci. La coiffe 13 est un cadre comprenant un ensemble de parois latérales 14 agencées dans le prolongement des parois latérales 6 du récipient 4. La hauteur des parois latérales 14 est suffisamment importante pour que la coiffe 13 accueille la masse M, c'est-à-dire l'ensemble formé par l'objet O entouré des particules non liées P. La hauteur des parois latérales 14 peut être au moins égale à la course du fond mobile 5 entre sa position haute et sa position basse. Une des parois latérales 14 est pourvu d'une ouverture 15 dont la largeur et la hauteur sont au moins égales respectivement à la largeur et à la hauteur de la masse M. Le dispositif de transvasement 11 peut aussi comprendre une rampe de guidage 16 en vis-à-vis de l'ouverture 15, qui est configurée pour guider le déplacement latéral de la masse M. La rampe de guidage peut être inclinée vers le bas de manière à favoriser l'évacuation de la masse M hors de la coiffe 13. La coiffe 13 et/ou la rampe de guidage 16 peuvent éventuellement être pourvues d'un couvercle pour éviter toute dispersion ou mise en suspension des particules non liées lors du déplacement latéral de la masse M.

Le dispositif de transvasement 11 comprend aussi un actionneur 17 configuré pour exercer une action mécanique sur la masse M. Selon le premier mode de réalisation, illustré sur les figures 1 à 3, l'actionneur 17 comprend une racle 18 mobile en translation horizontalement. La racle 18 est agencée du côté de la coiffe 13 opposé à l'ouverture 15, et positionnée de sorte à ce que son bord inférieur s'étende au niveau de la surface supérieure du fond mobile 5 lorsqu'il est en position haute ou légèrement au-dessus de cette surface supérieure. La racle 18 est configurée pour exercer un appui latéral sur la masse M de manière à la pousser horizontalement au travers de l'ouverture 15 puis sur la rampe de guidage 16. En particulier, la racle 18 peut comprendre une surface d'appui qui s'étend sur tonte la largeur et sur toute la hauteur de la masse M de manière à générer une poussée uniforme sur celle-ci. En remarque, la masse M peut contenir une superposition de plusieurs couches d'objets obtenus par liage de poudre. Dans ce cas, l'actionneur 17 peut être configuré pour exercer une action mécanique uniquement sur la couche supérieure de la masse M. Notamment, la racle 18 peut comprendre une surface d'appui qui s'étend uniquement sur la hauteur d'une telle couche. Une fois cette première couche transvasée vers l'équipement de dépoudrage 3, le fond mobile 5 peut remonter d'une hauteur égale à la hauteur d'une couche, de manière à transvaser la couche suivante vers l'équipement de dépoudrage 3. On obtient ainsi un transvasement de la masse M couche par couche.

Le dispositif de séparation 12 comprend un séparateur 21 et un moyen de vibration ultrasonore 22 du séparateur. Le séparateur 21, ou grille 21, est un instrument de type tamis. Il est formé d'un réseau de mailles calibrées qui sert à séparer des particules en fonction de leur taille. Le séparateur peut être par exemple une toile tressée de fils. Les fils de la toile peuvent être des fils métalliques, notamment en acier ou en inox, voire des fils en nylon. Le séparateur peut également être une plaque percée de trous. Le séparateur 21 comprend une taille de maille adaptée pour laisser passer les particules non liées P et pour retenir l'objet O. La taille de maille du séparateur peut être par exemple comprise entre 50µm et 3mm inclus, de préférence entre 200µm et 1mm inclus. En remarque, les particules non liées peuvent éventuellement former des agrégats de plusieurs particules dont la taille demeure cependant largement inférieure à la taille de l'objet O. Avantageusement la taille de maille du séparateur 21 est aussi adaptée pour laisser passer de tels agrégats de particules.

Avantageusement, le séparateur 21 est une plaque de tôle pourvue d'une pluralité de trous, chaque trou étant formé depuis la face utile du séparateur, c'est-à-dire la face du séparateur sur laquelle l'objet O est destiné à reposer. Ces trous peuvent être par exemple réalisés par perçage, par poinçonnage, par emboutissage ou encore par tout autre procédé équivalent. Dans tous les cas, le procédé est donc adapté pour qu'une bavure résultant du procédé de fabrication se trouve sur une face du séparateur 21 opposée à la face utile. Sur la face utile, les bords des trous peuvent ainsi se trouver en léger retrait par rapport au plan dans lequel la face utile s'étend. On obtient ainsi un état de surface optimal de la face utile du séparateur 21, ce qui évite toute abrasion de l'objet O lorsqu'il progresse sur cette face. Notamment, l'état de surface de la face utile du séparateur est ainsi bien plus lisse que l'état de surface obtenu par une toile métallique où chaque croisement de fil crée une aspérité susceptible d'abraser l'objet.

Le séparateur 21 est supporté par une structure 23 agencée à la périphérie du séparateur 21. La structure 23 est fixée sur une face inférieure du séparateur, notamment par collage. La face supérieure du séparateur 21 s'étend globalement dans un plan et est dépourvue d'élément de la structure 23 afin de ne pas entraver le glissement de l'objet O à sa surface. Des glissières peuvent néanmoins être prévues le long de chaque côté du séparateur pour éviter la chute de l'objet O ou des particules non liées. En outre, un bac de récupération 24 peut être prévu sous le séparateur 21 afin de récupérer les particules non liées P passées au travers du séparateur 21.

Le séparateur 21 s'étend dans un plan incliné selon un angle A1 non nul avec un plan horizontal. La pente du séparateur peut être choisie de manière à ce que l'objet O et les particules non liées P descendent le long du séparateur 21 seulement lorsque le séparateur est mis en vibration ultrasonore. Ainsi, seule la combinaison des vibrations ultrasonores du séparateur et de la force de gravité permet de faire progresser l'objet sur le séparateur. L'angle A1 est de préférence inférieur ou égal à 20°, notamment compris entre 5° et 10°.

Selon le premier mode de réalisation, le moyen de vibration ultrasonore 22 est un convertisseur électroacoustique 25 configuré pour transmettre des ultrasons à la structure 23. En particulier, le convertisseur électroacoustique 25 peut être fixé en partie haute de la structure 23, notamment sur un bord supérieur de la structure. Le séparateur 21 peut ainsi être mis en vibration par l'intermédiaire de la structure 23.

Le convertisseur électroacoustique 25 peut comprendre un élément piézoélectrique relié électriquement à un générateur de courant électrique. De préférence, le générateur de courant est configuré pour faire vibrer le convertisseur électroacoustique 25, ainsi que le séparateur 21 auquel le convertisseur électroacoustique 25 est fixé, à une fréquence comprise entre 20kHz et 80kHz, de préférence entre 25kHz et 45kHz inclus, notamment entre 30kHz et 40kHz inclus, voire une fréquence de l'ordre de 35kHz. Le convertisseur électroacoustique 25 peut aussi être associé à un générateur de courant multifréquence, de manière à ce que le convertisseur électroacoustique 25 puisse émettre une superposition d'ondes ultrasonores de différentes fréquences dans les plages de fréquences mentionnées ci-dessus. Le générateur de courant est configuré pour que le convertisseur électroacoustique 25 émette des ultrasons de manière périodique, en alternant des phases de vibration du séparateur et des phases de repos où le séparateur ne vibre pas. Ceci permet de limiter le temps d'exposition de l'objet aux ultrasons tout en conservant une grande efficacité du procédé. Le générateur de courant peut également être configuré pour que le convertisseur électroacoustique 25 émette des ultrasons dont la fréquence varie dans la plage allant de 25kHz à 45kHz, voire dans la plage allant de 30kHz à 40kHz.

Les ultrasons permettent non seulement de faire avancer l'objet O sur le séparateur 21, mais également de faire résonner l'objet O. Lorsque l'objet O résonne, des points différents de cet objet supportent, à un même instant, des vitesses et des accélérations différentes. Cette sollicitation est donc bien différente d'une simple secousse de l'objet où l'ensemble des points de l'objets supportent à un même instant la même vitesse et la même accélération. De manière surprenante, il a été découvert que de telles sollicitations permet de débarrasser plus efficacement l'objet de la poudre non liée présente à sa surface tout en préservant son intégrité. En particulier, la poudre colmatée dans des pores ou orifices en surface de l'objet peut être efficacement séparée de l'objet. De plus, on constate une absence d'abrasion des objets à l'issue de leur dépoudrage.

Avantageusement, on prévoit un élément de découplage 26 interposé entre le dispositif de transvasement 11 et le dispositif de séparation 12, notamment entre la rampe de guidage 16 et le séparateur 21. Cet élément de découplage 26 peut être par exemple une membrane ou encore tout élément souple propre à absorber des vibrations ultrasonores. On peut même prévoir un simple jeu entre le séparateur 21 et la rampe de guidage 16. Ainsi, ni le dispositif de transvasement 11, ni le récipient 4 auquel le dispositif de transvasement 11 est fixé ne sont mis en vibration ultrasonore par le convertisseur électroacoustique 25. Avantageusement, l'élément de découplage 26 forme une interface étanche entre le dispositif de transvasement 11 et le dispositif de séparation 12, ce qui permet d'éviter que des particules non liées soient dispersées hors de l'équipement de dépoudrage.

Avantageusement, le dispositif de séparation comprend aussi une rampe d'évacuation 32 dans le prolongement du séparateur 21. Cette rampe d'évacuation 32 peut être agencée au niveau d'un bord inférieur de la structure 23. La rampe d'évacuation 32 peut même être formée directement dans la structure 23. Elle permet une évacuation de l'objet sans choc vers une bande transporteuse.

Pour fabriquer l'objet O au moyen de l'installation de fabrication 1, on procède tout d'abord par une phase de synthèse additive de type liage de poudre par projection de liant. On répartit une fine couche de particules sur le fond mobile 5, on la compacte au moyen d'un rouleau, puis on applique localement le liant sur la poudre, créant ainsi une couche de l'objet. Puis, le fond mobile 5 descend d'un pas prédéterminé pour permettre l'ajout d'une nouvelle couche de particules. Le procédé est ainsi répété jusqu'à la création de l'objet O. L'objet O est donc un bloc stratifié constitué de particules liées. Le fond mobile 5 est alors en position basse et l'objet O est noyé au milieu de particules non liées P comme cela est représenté sur la figure 1.

Ensuite, le fond mobile 5 remonte jusqu'à sa position haute. La masse M est alors positionnée à l'intérieur de la coiffe 13, en face de l'ouverture 15. Le dispositif de transvasement 11 est alors actionné de sorte à transvaser latéralement la masse M (c'est-à-dire la déplacer latéralement) depuis la coiffe 13 jusqu'au séparateur 21 en passant par l'ouverture 15. La masse M se déplace donc selon une direction sensiblement horizontale. En particulier, on évite toute opération de renversement ou de retournement de la masse M ce qui pourrait choquer l'objet qu'elle contient et éventuellement l'endommager. Cette opération de transvasement est illustrée schématiquement sur la figure 2.

Le séparateur 21 est alors mis en vibration ultrasonore, ce qui provoque d'une part la séparation des particules non liées P de l'objet O, et la descente progressive de l'objet O sur le séparateur. A chaque vibration ultrasonore les particules non liées en contact avec le séparateur 21 sont projetées au-dessus du séparateur dans une direction globalement perpendiculaire au séparateur 21. Ainsi les particules non liées projetées avancent progressivement vers le bord inférieur du séparateur 21. Lorsque les particules non liées retombent sur le séparateur 21, elles peuvent éventuellement passer au travers de ses mailles. Les particules non liées qui ne passent pas au travers des mailles sont à nouveau projetées en l'air lors d'une vibration ultrasonore suivante du séparateur et bénéficient ainsi d'une nouvelle chance de passer au travers des mailles du séparateur. Avantageusement, la pente du séparateur, la longueur du séparateur, ainsi que la fréquence des ondes vibratoires ultrasonores sont différents paramètres de fonctionnement pouvant être adaptés afin d'obtenir un dépoudrage complet ou quasi-complet de l'objet O lorsque ce dernier atteint le bord inférieur du séparateur 21. Les ondes ultrasonores permettent, compte tenu de leur fréquence et de leur amplitude, de désagréger les particules non liées et de favoriser leur écoulement au travers du séparateur 21, sans pour autant détériorer l'objet O. En outre, les particules non liées absorbent les ondes ultrasonores au détriment de l'objet O ce qui permet de préserver ce dernier. Une alternance de phases de vibration du séparateur et de phases de repos où le séparateur ne vibre pas permet aux particules de passer plus facilement au travers des mailles du séparateur 21. En effet, si plusieurs particules non liées forment un tas au-dessus d'un trou du séparateur lors d'une phase de repos, ce tas s'effondre lors de la phase de vibration ultrasonore suivante, ce qui fait passer une partie des particules non liées de ce tas au travers du trou. Les particules non liées qui passent au travers du séparateur sont récupérées dans le bac de récupération 24. Sur la figure 3, on a illustré par une première flèche F1, la direction d'avancement de l'objet O en surface du séparateur 21. Une deuxième flèche F2 représente le flux de l'ensemble des particules non liées passant au travers du séparateur 21 et qui sont ensuite récupérées dans le bac de récupération 24.

Grâce à l'invention, on parvient donc à dépoudrer des objets obtenus par synthèse additive de type liage de poudre de manière efficace et complètement automatisée. Le dépoudrage de l'objet O et son avancement sur le séparateur 21 peuvent résulter uniquement des vibrations ultrasonores du séparateur 21 combinées avec la force de gravité. On récupère en sortie du séparateur un objet O dépoudré, prêt à être consolidé, notamment par une étape de frittage ou par un revêtement. Le procédé de dépoudrage peut ne requérir aucune manutention de l'objet O, ni une opération de soufflage des particules non liées, ni toute autre action mécanique sur l'objet O ou sur les particules non liées. Alternativement, l'objet O peut être en grande partie dépoudrée à l'issue du procédé de dépoudrage. Une opération de dépoudrage manuel de l'objet qui suivrait le procédé de dépoudrage précédemment décrit serait grandement facilité. En effet, d'une part la quantité de particules non liées à retirer serait réduite, mais d'autre part ces particules non liées ayant déjà subi des vibrations ultrasonores, elles se présenteraient sous une forme pulvérulente, plus facile à retirer. Le procédé permet aussi d'éviter la mise en suspension dans l'air de grandes quantité de particules non liées. Le procédé est ainsi compatible avec l'utilisation de particules de très petites tailles dont la manipulation demande de grande précaution en raison des risques d'inhalation. Grâce à l'invention, on obtient donc un moyen simple et peu onéreux pour dépoudrer des objets obtenus par liage de poudre. La très prometteuse technologie de synthèse additive par liage de poudre par projection de liant peut ainsi être déployée à une échelle industrielle.

On décrit à présent diverses variantes de réalisation de l'équipement de dépoudrage. Sauf indication contraire, ces variantes de réalisation peuvent être librement combinées avec le premier mode de réalisation ou entre elles. Pour simplifier la description, on s'attache uniquement à décrire les différences à l'égard du premier mode de réalisation. Lorsque cela est possible, les mêmes références utilisées pour la description du premier mode de réalisation sont utilisées pour décrire les éléments des différentes variantes de réalisation de l'équipement de dépoudrage.

Selon une variante de réalisation illustrée sur la figure 4, l'actionneur 17 est un moyen de génération de vibrations 19 apte à générer des vibrations tendant à déplacer la masse M au travers de l'ouverture 15. En particulier, le moyen de génération de vibrations 19 est configuré pour fonctionner selon le principe du couloir vibrant : La coiffe 13 est mise en vibration selon un axe X1, perpendiculaire au plan dans lequel s'étend l'ouverture 15. Le déplacement de la coiffe 13 en direction de l'ouverture 15 est plus lent que le déplacement de la coiffe 13 dans la direction opposée à l'ouverture. Une telle asymétrie de l'onde vibratoire induit un déplacement de la masse M en direction de l'ouverture 15. L'utilisation du moyen de génération de vibrations 19 selon le principe du couloir vibrant est avantageuse car on dispose ainsi d'un moyen de transvasement 11 qui ne comprend aucun élément articulé ou coulissant les uns par rapport aux autres. On évite ainsi que des particules non liées se coincent dans le dispositif d'évacuation 11 et altèrent son fonctionnement.

Selon la variante de réalisation illustrée sur la figure 4, l'installation de fabrication 1 comprend d'une part le moyen de génération de vibrations 19, et d'autre part le moyen de vibration 22 sous forme d'un convertisseur électroacoustique 25. L'amplitude des ondes vibratoires générées par le moyen de génération de vibrations 19 (de l'ordre de 1mm) peut être largement supérieure à l'amplitude des ondes vibratoires générées par le convertisseur électroacoustique 25. Lorsque l'objet O est noyé dans la poudre non liée, il peut être soumis à des ondes vibratoires d'amplitude plus importante que des ondes ultrasonores, sans être endommagé. Par contre, l'objet O ne doit pas être soumis aux ondes vibratoires générées par le moyen de génération de vibrations 19 lorsqu'il se trouve sur le séparateur 21, sans quoi il pourrait être endommagé, voire détruit. Par conséquent, dans une telle variante de réalisation, on prévoit avantageusement un élément de découplage 26 interposé entre le dispositif de transvasement 11 et le dispositif de séparation 12, notamment entre la rampe de guidage 16 et le séparateur 21.

D'autres modes de réalisation de l'actionneur 17 pourraient être envisagés. Par exemple, le fond mobile 5 ou même l'ensemble formé par l'unité de fabrication 2 surmonté de la coiffe 13 pourrait être incliné en direction de l'ouverture 15. Selon un autre mode de réalisation, le dispositif de transvasement 11 pourrait être intégré directement dans l'unité de fabrication 2. Dans cette hypothèse, l'ouverture 15 serait formée dans l'une des parois latérale 6. Cette ouverture serait alors refermée par une porte latérale lors de la phase de fabrication par synthèse additive puis ouverte pour permettre l'évacuation de la masse M.

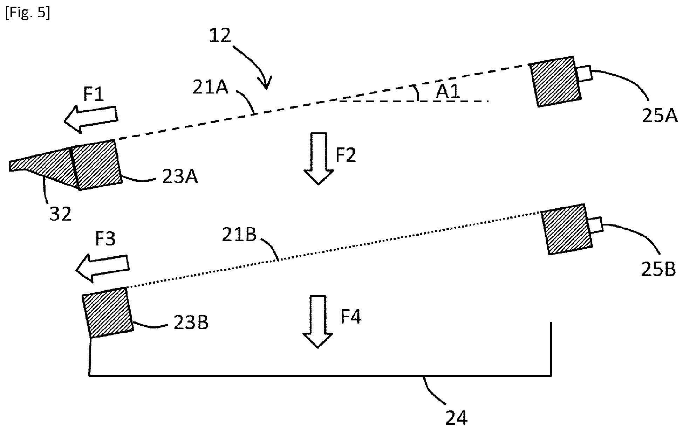

L'invention permet non seulement d'évacuer et de dépoudrer des objets fabriqués par synthèse additive mais elle permet aussi de traiter les particules non liées P récupérées. En référence à la figure 5, le dispositif de dépoudrage 12 peut avantageusement comprendre un premier séparateur 21A et un deuxième séparateur 21B positionné en dessous du premier séparateur 21A. Chacun des deux séparateurs 21A, 21B peut comprendre un cadre 23A, 23B qui lui est propre et peut être mis en vibration par un moyen de vibration tel qu'un convertisseur électroacoustique 25A, 25B fixé au cadre correspondant. Une taille de maille du deuxième séparateur 21B est strictement inférieure à une taille de maille du premier séparateur 21A. En particulier, la taille de maille du premier séparateur 21A est adaptée d'une part pour laisser passer les particules non liées P ainsi que les agrégats de particules non liées et d'autre part pour retenir l'objet O. La taille de maille du deuxième séparateur 21B est adaptée pour retenir les particules non liées P sous forme d'agrégat et pour laisser passer les particules non liées P non agglomérées entre elles. Autrement dit, le deuxième séparateur 21B est configuré pour tamiser les particules non liées P de l'objet O à l'issue de la phase de fabrication par synthèse additive. Le premier séparateur 21A et le deuxième séparateur 21B, s'étendent chacun dans un plan formant un angle non nul avec le plan horizontal, notamment un angle A1 tel que décrit précédemment. Le premier séparateur 21A peut être parallèle au deuxième séparateur 21B. Sur la figure 5, on a illustré par une première flèche F1, la direction d'avancement de l'objet O en surface du premier séparateur 21A. Une deuxième flèche F2 représente le flux de l'ensemble des particules non liées filtrées par le premier séparateur 21A. Une troisième flèche F3 représente la direction d'avancement des agrégats de particules non liées en surface du deuxième séparateur 21B. Une quatrième flèche F4 représente le flux de particules non liées tamisées par le deuxième séparateur 21B. Les particules non liées ainsi tamisées peuvent ainsi être réutilisées dans un nouveau cycle de fabrication par synthèse additive.

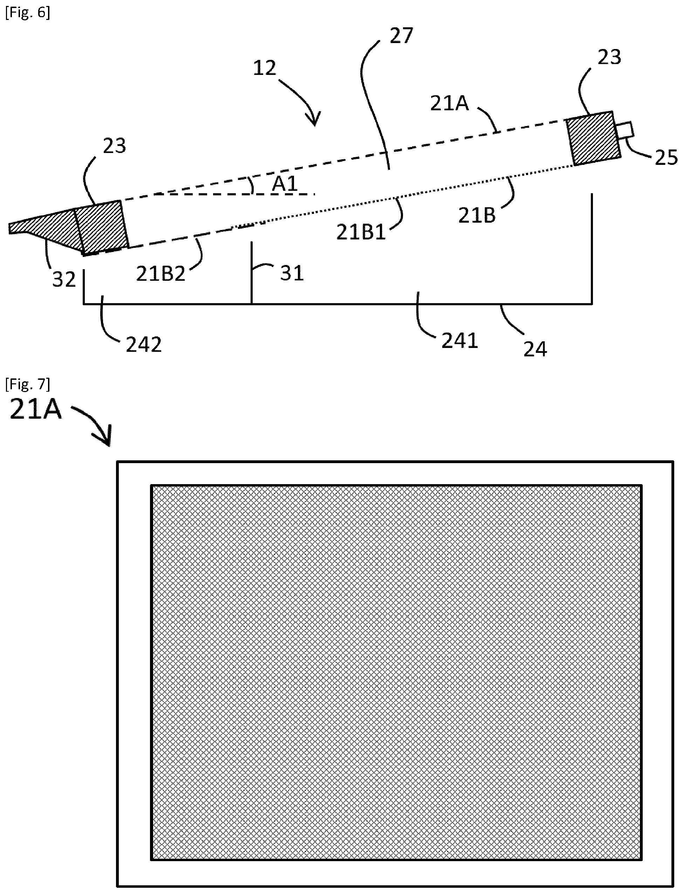

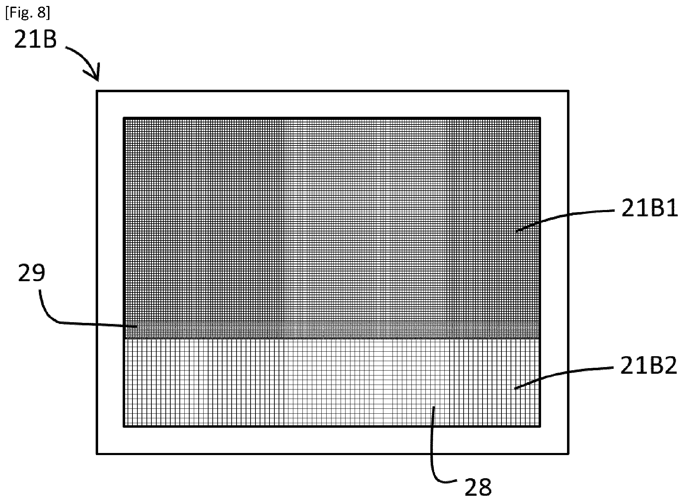

Les figures 6, 7 et 8 illustrent encore un autre perfectionnement de l'invention. A l'instar de la variante de réalisation présentée sur la figure 5, le dispositif de séparation 12 comprend également un premier séparateur 21A et un deuxième séparateur 21B. Les deux séparateurs 21A et 21B sont fixés à une même structure 23. Le premier séparateur et le deuxième séparateur s'étendent tous les deux dans un plan formant un angle non nul avec le plan horizontal, notamment un angle A1 tel que décrit précédemment. Le premier séparateur 21A peut s'étendre parallèlement au deuxième séparateur 21B. La structure 23 et les deux séparateurs 21A et 21B définissent un volume intérieur 27 du dispositif de séparation 12. La structure 23 est mise en vibration par un unique convertisseur électroacoustique 25. Ce convertisseur électroacoustique 25 est donc apte à faire vibrer le premier séparateur 21A et le deuxième séparateur 21B par l'intermédiaire de la structure 23.

Le dispositif de séparation comprend une ouverture 28 configurée pour évacuer des particules contenues dans le volume intérieur 27, c'est-à-dire pour évacuer des refus du deuxième séparateur. Cette ouverture comprend un bord commun avec de deuxième séparateur 21B afin qu'aucune particule ne reste coincée sur le deuxième séparateur. L'ouverture 28 est agencée en partie basse du deuxième séparateur de sorte à ce que les particules non liées se dirigent vers l'ouverture 28 par l'action combinée de la gravité et des vibrations du deuxième séparateur.

L'ouverture 28 peut être formée dans le cadre 23, toutefois, dans une telle hypothèse, le deuxième séparateur 21B n'est plus maintenu par le cadre au niveau de cette ouverture. Un tel agencement rendrait particulièrement difficile l'utilisation d'une toile de tamisage tendue pour le deuxième séparateur 21B. En effet, l'utilisation d'une toile de tamisage tendue requiert de préférence que celle-ci soit fixée sur toute sa périphérie. De manière originale, l'ouverture 28 peut être formée directement dans le deuxième séparateur 21B. L'ouverture 28 est ainsi coplanaire au deuxième séparateur. L'ouverture 28 peut se présenter sous la forme d'une zone du deuxième séparateur 21B présentant une taille de maille plus importante, notamment une taille de maille plus élevée que la taille de maille du premier séparateur.

En particulier, le deuxième séparateur 21B peut être formé par l'association de deux toiles de tamisage 21B1 et 21B2. La première toile de tamisage 21B1 comprend une taille de maille strictement inférieure à la taille de maille du premier séparateur 21A, par exemple une taille de maille comprise entre 25µm et 100µm inclus. La deuxième toile de tamisage 21B2 comprend une taille de maille strictement supérieure à la taille de maille du premier séparateur 21A, par exemple strictement supérieure à 250µm. La deuxième toile de tamisage 21B1 est positionnée en contrebas de la deuxième toile de tamisage 21B2, c'est-à-dire que les particules présentes en surface du deuxième séparateur se déplacent de la première toile de tamisage 21B1 vers la deuxième toile de tamisage 21B2 sous l'effet des vibrations du deuxième séparateur combiné avec la gravité.

Les deux toiles de tamisage 21B1, 21B2 peuvent être collées l'une à l'autre au niveau d'une bande de recouvrement 29 comprenant les deux toiles de tamisage 21B1 et 21B2 superposées. Avantageusement, une face inférieure de la première toile de tamisage 21B1 est collée sur une face supérieure de la deuxième toile de tamisage 21B2, ce qui forme une marche descendante pour les particules se déplaçant de la première toile de tamisage 21A vers la deuxième toile de tamisage 21B. Ainsi, on évite de retenir des particules à l'interface entre les deux toiles de tamisage. Le bac de récupération 24 comprend deux compartiments séparés par une cloison 31. La cloison 31 peut s'étendre verticalement sensiblement au niveau de la bande de recouvrement 29.

Lorsque le dispositif de séparation 12 fonctionne, l'objet O est évacué en sortie du premier séparateur 21A selon la flèche F1. Les particules non liées sous formes d'agrégat sont récupérées dans le compartiment 242 en passant par l'ouverture 28 selon la flèche F3. Les particules non liées tamisées par la première toile de tamisage 21B1 sont récupérées dans le compartiment 241. On dispose ainsi d'un dispositif de dépoudrage à la fois compact et simple à fabriquer. Ce dispositif de dépoudrage permet de dépoudrer l'objet O, de le convoyer jusqu'au bord inférieur du premier séparateur, et de tamiser les particules non liées en vue de leur réutilisation dans un nouveau cycle de fabrication par synthèse additive.

## Revendications

1. Procédé de dépoudrage d'un objet (O) obtenu par synthèse additive de type liage de poudre par projection de liant, **caractérisé en ce qu'**il comprend :
- une étape de transvasement, par un déplacement latéral, d'une masse (M) comprenant ledit objet (O) et des particules non liées (P), sur un dispositif de séparation (12), le dispositif de séparation comprenant un séparateur (21) avec une taille de maille adaptée pour laisser passer les particules non liées et adaptée pour retenir ledit objet, le séparateur s'étendant dans un plan incliné selon un angle (A1) non nul par rapport à un plan horizontal, et
- une étape de vibration du séparateur de sorte à séparer les particules non liées dudit objet et de sorte à faire avancer ledit objet sur le séparateur, **caractérisé par** l'étape de vibration étant une étape de vibration par ultrasons et comprenant une alternance de phases de vibration du séparateur (21) et de phases de repos où le séparateur ne vibre pas.

2. Procédé de dépoudrage selon la revendication précédente, **caractérisé en ce que** ledit objet (O) est obtenu par liage de particules, notamment de particules métalliques, dont le diamètre est inférieur ou égale à 80µm, de préférence inférieur ou égal à 40µm.

3. Procédé de dépoudrage selon l'une des revendications précédentes, **caractérisé en ce que** la vibration par ultrasons du séparateur (21) est obtenue par des ondes ultrasonores de fréquence comprise entre 20 kHz et 80 kHz inclus, notamment entre 25kHz et 45kHz inclus.

4. Procédé de dépoudrage selon l'une des revendications précédentes, **caractérisé en ce que** le séparateur (21) s'étend dans un plan incliné selon un angle inférieur ou égal à 20° avec un plan horizontal, notamment un angle compris entre 5° et 10° inclus avec un plan horizontal.

5. Procédé de dépoudrage selon l'une des revendications précédentes, **caractérisé en ce que** le transvasement de ladite masse (M) est effectué au moyen d'une racle (18) mobile en translation horizontale.

6. Procédé de dépoudrage selon l'une des revendications précédentes, **caractérisé en ce que** le transvasement de ladite masse (M) est effectué par un moyen de génération de vibrations (19) fonctionnant selon le principe du couloir vibrant.

7. Procédé de dépoudrage selon l'une des revendications précédentes, **caractérisé en ce que** le séparateur (21) est une plaque de tôle pourvue d'une pluralité de trous, chaque trou étant formé depuis la face du séparateur sur laquelle ledit objet (O) est destiné à reposer.

8. Procédé de dépoudrage selon l'une des revendications précédentes, **caractérisé en ce que** le dispositif de séparation (12) comprend un premier séparateur (21A) et un deuxième séparateur (21B) positionné en dessous du premier séparateur, une taille de maille du deuxième séparateur étant strictement inférieure à une taille de maille du premier séparateur, et **en ce que** le procédé de dépoudrage comprend :
- une étape de vibration ultrasonore du premier séparateur (21A) de sorte à séparer les particules non liées dudit objet et de sorte à faire avancer ledit objet (O) sur le séparateur, et
- une étape de vibration ultrasonore du deuxième séparateur (21B) de sorte à tamiser les particules non liées (P).

9. Procédé de dépoudrage selon la revendication précédente, **caractérisé en ce que** le dispositif de séparation (12) comprend une unique structure (23) et un convertisseur électroacoustique (25) configuré pour transmettre des ultrasons à la structure, le premier séparateur (21A) et le deuxième séparateur (21B) étant fixés à la structure, le premier séparateur et le deuxième séparateur étant mis en vibration par ultrasons lors des étapes de vibration du premier séparateur et du deuxième séparateur, le dispositif de séparation (12) comprenant en outre une ouverture (28) pour évacuer des refus du deuxième séparateur (21B), l'ouverture comprenant un bord commun avec le deuxième séparateur (21B), notamment l'ouverture (28) étant formée directement dans le deuxième séparateur (21B).

10. Procédé de fabrication d'un objet (O), **caractérisé en ce qu'**il comprend :
- une phase de fabrication dudit objet par synthèse additive de type liage de poudre par projection de liant au moyen d'une unité de fabrication (2), puis
- la mise en œuvre du procédé de dépoudrage dudit objet selon l'une des revendications précédentes.

11. Procédé de fabrication selon la revendication précédente, **caractérisé en ce qu'**il comprend une étape de frittage dudit objet suite à la mise en œuvre du procédé de dépoudrage.

12. Procédé de fabrication selon la revendication 110ou 11, **caractérisé en ce que** l'unité de fabrication (2) comprend un fond mobile (5) en translation, le fond mobile étant apte à descendre progressivement pour fabriquer ledit objet couche par couche, et **en ce que** le transvasement de ladite masse (M) sur le séparateur (12) est précédé d'une étape de remontée du fond mobile.

## Patentansprüche

1. Verfahren zur Entpulverung eines Objekts (O), das durch additive Synthese vom Typ Pulverbettbindemittelstrahlverfahren erhalten wurde, **dadurch gekennzeichnet, dass** es umfasst:
- einen Schritt des Umfüllens, durch eine seitliche Bewegung, einer Masse (M), die das besagte Objekt (O) und ungebundene Partikel (P) umfasst, auf eine Trennvorrichtung (12), wobei die Trennvorrichtung einen Separator (21) mit einer Maschenweite umfasst, die geeignet ist, die ungebundenen Partikel durchzulassen, und geeignet ist, das besagte Objekt zurückzuhalten, wobei sich der Separator in einer Ebene erstreckt, die unter einem von null verschiedenen Winkel (A1) gegenüber einer horizontalen Ebene geneigt ist, und
- einen Schritt des Vibrierens des Separators, so dass die ungebundenen Partikel von dem besagten Objekt getrennt werden und das besagte Objekt auf dem Separator voranbewegt wird,
**dadurch gekennzeichnet, dass** der Vibrationsschritt ein Ultraschallvibrationsschritt ist und einen Wechsel von Vibrationsphasen des Separators (21) und Ruhephasen, in denen der Separator nicht vibriert, umfasst.

2. Entpulverungsverfahren nach dem vorhergehenden Anspruch, **dadurch gekennzeichnet, dass** das besagte Objekt (O) durch Binden von Partikeln, insbesondere metallischen Partikeln, erhalten wird, deren Durchmesser kleiner oder gleich 80 µm, vorzugsweise kleiner oder gleich 40 µm ist.

3. Entpulverungsverfahren nach einem der vorhergehenden Ansprüche, **dadurch gekennzeichnet, dass** die Ultraschallvibration des Separators (21) durch Ultraschallwellen einer Frequenz erhalten wird, die zwischen 20 kHz und 80 kHz einschließlich liegt, insbesondere zwischen 25 kHz und 45 kHz einschließlich.

4. Entpulverungsverfahren nach einem der vorhergehenden Ansprüche, **dadurch gekennzeichnet, dass** sich der Separator (21) in einer Ebene erstreckt, die unter einem Winkel von kleiner oder gleich 20° gegenüber einer horizontalen Ebene geneigt ist, insbesondere einem Winkel zwischen 5° und 10° einschließlich gegenüber einer horizontalen Ebene.

5. Entpulverungsverfahren nach einem der vorhergehenden Ansprüche, **dadurch gekennzeichnet, dass** das Umfüllen der besagten Masse (M) mittels eines in horizontaler Translation beweglichen Rakels (18) durchgeführt wird.

6. Entpulverungsverfahren nach einem der vorhergehenden Ansprüche, **dadurch gekennzeichnet, dass** das Umfüllen der besagten Masse (M) durch ein Vibrationserzeugungsmittel (19) durchgeführt wird, das nach dem Prinzip des Schwingförderers funktioniert.

7. Entpulverungsverfahren nach einem der vorhergehenden Ansprüche, **dadurch gekennzeichnet, dass** der Separator (21) eine Blechplatte ist, die mit einer Vielzahl von Löchern versehen ist, wobei jedes Loch von der Seite des Separators aus gebildet ist, auf der das besagte Objekt (O) aufzuliegen bestimmt ist.

8. Entpulverungsverfahren nach einem der vorhergehenden Ansprüche, **dadurch gekennzeichnet, dass** die Trennvorrichtung (12) einen ersten Separator (21A) und einen zweiten Separator (21B) umfasst, der unterhalb des ersten Separators positioniert ist, wobei eine Maschenweite des zweiten Separators strikt kleiner als eine Maschenweite des ersten Separators ist, und dass das Entpulverungsverfahren umfasst:
- einen Schritt der Ultraschallvibration des ersten Separators (21A), so dass die ungebundenen Partikel von dem besagten Objekt getrennt werden und das besagte Objekt (O) auf dem Separator voranbewegt wird, und
- einen Schritt der Ultraschallvibration des zweiten Separators (21B), so dass die ungebundenen Partikel (P) gesiebt werden.

9. Entpulverungsverfahren nach dem vorhergehenden Anspruch, **dadurch gekennzeichnet, dass** die Trennvorrichtung (12) eine einzige Struktur (23) und einen elektroakustischen Wandler (25) umfasst, der konfiguriert ist, Ultraschall an die Struktur zu übertragen, wobei der erste Separator (21A) und der zweite Separator (21B) an der Struktur befestigt sind, wobei der erste Separator und der zweite Separator während der Vibrationsschritte des ersten Separators und des zweiten Separators in Ultraschallvibration versetzt werden, wobei die Trennvorrichtung (12) ferner eine Öffnung (28) zum Abführen von Überkorn des zweiten Separators (21B) umfasst, wobei die Öffnung eine gemeinsame Kante mit dem zweiten Separator (21B) aufweist, insbesondere die Öffnung (28) direkt in dem zweiten Separator (21B) gebildet ist.

10. Verfahren zur Herstellung eines Objekts (O), **dadurch gekennzeichnet, dass** es umfasst:
- eine Phase der Herstellung des besagten Objekts durch additive Synthese vom Typ Pulverbettbindemittelstrahlverfahren mittels einer Herstellungseinheit (2), dann
- die Durchführung des Entpulverungsverfahrens des besagten Objekts nach einem der vorhergehenden Ansprüche.

11. Herstellungsverfahren nach dem vorhergehenden Anspruch, **dadurch gekennzeichnet, dass** es einen Sinterschritt des besagten Objekts im Anschluss an die Durchführung des Entpulverungsverfahrens umfasst.

12. Herstellungsverfahren nach Anspruch 10 oder 11, **dadurch gekennzeichnet, dass** die Herstellungseinheit (2) einen in Translation beweglichen Boden (5) umfasst, wobei der bewegliche Boden geeignet ist, progressiv abzusinken, um das besagte Objekt Schicht für Schicht herzustellen, und dass dem Umfüllen der besagten Masse (M) auf den Separator (12) ein Schritt des Anhebens des beweglichen Bodens vorausgeht.

## Claims

1. Method for depowdering an object (O) obtained by additive synthesis of the powder bed binder jetting type, **characterized in that** it comprises:
- a step of transferring, by a lateral movement, a mass (M) comprising said object (O) and unbound particles (P), onto a separation device (12), the separation device comprising a separator (21) with a mesh size adapted to allow the unbound particles to pass through and adapted to retain said object, the separator extending in a plane inclined at a non-zero angle (A1) with respect to a horizontal plane, and
- a step of vibrating the separator so as to separate the unbound particles from said object and so as to advance said object on the separator,
**characterized by** the vibration step being an ultrasonic vibration step and comprising an alternation of vibration phases of the separator (21) and rest phases during which the separator does not vibrate.

2. Depowdering method according to the preceding claim, **characterized in that** said object (O) is obtained by binding particles, in particular metallic particles, the diameter of which is less than or equal to 80 µm, preferably less than or equal to 40 µm.

3. Depowdering method according to one of the preceding claims, **characterized in that** the ultrasonic vibration of the separator (21) is obtained by ultrasonic waves of frequency comprised between 20 kHz and 80 kHz inclusive, in particular between 25 kHz and 45 kHz inclusive.

4. Depowdering method according to one of the preceding claims, **characterized in that** the separator (21) extends in a plane inclined at an angle less than or equal to 20° with a horizontal plane, in particular an angle comprised between 5° and 10° inclusive with a horizontal plane.

5. Depowdering method according to one of the preceding claims, **characterized in that** the transfer of said mass (M) is carried out by means of a scraper (18) movable in horizontal translation.

6. Depowdering method according to one of the preceding claims, **characterized in that** the transfer of said mass (M) is carried out by vibration-generating means (19) operating according to the principle of the vibrating conveyor.

7. Depowdering method according to one of the preceding claims, **characterized in that** the separator (21) is a sheet metal plate provided with a plurality of holes, each hole being formed from the face of the separator on which said object (O) is intended to rest.

8. Depowdering method according to one of the preceding claims, **characterized in that** the separation device (12) comprises a first separator (21A) and a second separator (21B) positioned below the first separator, a mesh size of the second separator being strictly smaller than a mesh size of the first separator, and **in that** the depowdering method comprises:
- a step of ultrasonic vibration of the first separator (21A) so as to separate the unbound particles from said object and so as to advance said object (O) on the separator, and
- a step of ultrasonic vibration of the second separator (21B) so as to sieve the unbound particles (P).

9. Depowdering method according to the preceding claim, **characterized in that** the separation device (12) comprises a single structure (23) and an electroacoustic transducer (25) configured to transmit ultrasound to the structure, the first separator (21A) and the second separator (21B) being fixed to the structure, the first separator and the second separator being set into ultrasonic vibration during the vibration steps of the first separator and the second separator, the separation device (12) further comprising an opening (28) for evacuating rejects from the second separator (21B), the opening comprising a common edge with the second separator (21B), in particular the opening (28) being formed directly in the second separator (21B).

10. Method for manufacturing an object (O), **characterized in that** it comprises:
- a phase of manufacturing said object by additive synthesis of the powder bed binder jetting type by means of a manufacturing unit (2), then
- the implementation of the depowdering method of said object according to one of the preceding claims.

11. Manufacturing method according to the preceding claim, **characterized in that** it comprises a sintering step of said object following the implementation of the depowdering method.

12. Manufacturing method according to claim 10 or 11, **characterized in that** the manufacturing unit (2) comprises a movable bottom (5) in translation, the movable bottom being able to descend progressively to manufacture said object layer by layer, and **in that** the transfer of said mass (M) onto the separator (12) is preceded by a step of raising the movable bottom.
